# EUROPEAN PATENT APPLICATION

(11) **EP 4 759 569 A1**
(43) Date of publication of application: **17.06.2026**
(21) Application number: 24218761.5
(22) Date of filing: 10.12.2024
(51) Int. Cl.: B60C 23/06, G01L 17/00

(54) **DETECTION OF A TIRE PRESSURE DEFECT**

(71) Applicant: Volvo Autonomous Solutions AB, 405 08 Göteborg (SE)
(72) Inventor: Ni, Lei, 417 67 Göteborg (SE); Hansson, Johan, 436 38 Askim (SE); Ediz, Said, 421 33 Västra Frölunda (SE); Wölfinger, Alexander, 442 65 Marstrand (SE)
(74) Representative: Valea AB

(57) **Abstract**

A computer system (600) comprising processing circuitry (602) configured to detect a tire pressure defect of a vehicle (1) comprising a first wheel (11) is provided. The first wheel (11) comprises a first rim (31) and a first tire (41). The processing circuitry (602) is configured to obtain first image data indicative of the first wheel (11) and a ground surface area in contact with the first tire (41). The processing circuitry (602) is configured to, based on the first image data, establish a first reference value representing a first distance (d1) between the first rim (31) and the ground surface area in contact with the first tire (41). The processing circuitry (602) is configured to, based on the established first reference value, detecting whether or not the first tire (41) has a tire pressure defect.

## Description

### TECHNICAL FIELD

The disclosure relates generally to tire pressure management. In particular aspects, the disclosure relates to detecting a tire pressure defect of a wheel of vehicle. The disclosure can be applied to heavy-duty vehicles, such as trucks, buses, and construction equipment, among other vehicle types. Although the disclosure may be described with respect to a particular vehicle, the disclosure is not restricted to any particular vehicle.

### BACKGROUND

To ensure that tires of a vehicle have sufficient pressure before an operation, a manual inspection of the tires may be performed. However, such a manual inspection may not find all tire pressure defects and may be time consuming. Furthermore, when the vehicle is autonomous, manual inspection may not be possible. A result is that the vehicle may travel with a defect, which may cause damage to the vehicle. Furthermore, travelling with too low or too high pressure in a tire may be inefficient in terms of energy consumption for driving the vehicle forward, and with regards to safety, the vehicle may need to urgently stop if a safety hazard is detected due to the pressure defect.

Hence, there is a strive to improve tire pressure management of a vehicle.

### SUMMARY

According to a first aspect of the disclosure, a computer system comprising processing circuitry configured to detect a tire pressure defect of a vehicle comprising a first wheel is provided. The first wheel comprises a first rim and a first tire. The processing circuitry is configured to obtain first image data indicative of the first wheel and a ground surface area in contact with the first tire.

The processing circuitry is configured to, based on the first image data, establish a first reference value representing a first distance between the first rim and the ground surface area in contact with the first tire.

The processing circuitry is configured to, based on the established first reference value, detect whether or not the first tire has a tire pressure defect.

The tire pressure defect may primarily relate to that a tire pressure of the first tire is too low as may be indicated by the first reference value being below a first threshold, or the tire pressure defect may relate to the tire pressure being too high, e.g., as may be indicated by the first reference value being above a second threshold.

The first aspect of the disclosure may seek to improve tire pressure management of a vehicle.

A technical benefit may include more efficient and accurate detection of a tire defect. A consequence is that it may be avoided that the vehicle travels with defect pressure, that is when the first tire is not well-pressurized. Furthermore, as the detection is made with respect to the first image data and with the first reference value, the detection can be automated such that involvement of a manual operator, e.g., for inspection, can be minimized or completely avoided. Accordingly, a higher degree of automation can be achieved which improves productivity as operators, vehicle occupants, or users can focus on other productive tasks.

Optionally in some examples, including in at least one preferred example, the processing circuitry is further configured to obtain the first image data from a first camera being directed towards a predetermined area. In these examples, the first wheel is at least partly arranged in the predetermined area.

A technical benefit may include improved tire pressure management, in particular relating to more accurately and efficiently detecting the tire pressure defect. This is since this allows for the first image data to be automatically obtained, and thereby enabling the detection of the tire pressure defect when the first wheel is in the predetermined area.

Optionally in some examples, including in at least one preferred example, obtaining the first image data from the first camera comprises triggering the first camera to obtain the first image data in response to at least one of:
- detecting a presence of the vehicle and/or the first wheel in the predetermined area, and
- receiving a signal from the vehicle.

If the vehicle is detected in general, the first camera may further locate and detect the first wheel by any suitable means such as by real time image analysis and/or by heuristics on where the first wheel is located within the predetermined area.

A technical benefit may include improved tire pressure management, in particular relating to more accurately and efficiently detecting the tire pressure defect. This is since the detection of the tire pressure defect can be fully automated by signaling from the vehicle or by detecting the first wheel in the predetermined area.

Optionally in some examples, including in at least one preferred example, the processing circuitry is further configured to obtain a second reference value indicative of a second distance representing any of:
- a distance across a predefined part of the first tire different from the first distance, or
- a distance across a predefined part of a second tire of a second wheel.

In these examples, the processing circuitry is further configured to detect whether or not the first tire has a tire pressure defect by comparing the first reference value with the second reference value. A tire pressure may be detected when a difference of the comparison is above a threshold. The threshold may be predefined.

A technical benefit may include improved tire pressure management, in particular relating to more accurately and efficiently detecting the tire pressure defect. This is since the tire pressure can more accurately be detected when comparing against the second distance and the difference is greater than the threshold.

Optionally in some examples, including in at least one preferred example, the second distance represents a distance between a second rim of the second wheel and a ground surface area in contact with a second tire of the second wheel. In some of these examples, the processing circuitry is configured to establish the second reference value based on the second distance.

A technical benefit may include improved tire pressure management, in particular relating to more accurately and efficiently detecting the tire pressure defect. This is since the second distance corresponds to the same distance as the first distance, and hence, the first and second reference values can be more easily compared and the tire pressure defect can be more accurately detected.

Optionally in some examples, including in at least one preferred example, the first wheel and the second wheel are arranged within a predefined distance from each other and share the same axle group of the vehicle.

A technical benefit may include improved tire pressure management, in particular relating to more accurately and efficiently detecting the tire pressure defect. This is since the loads applied to the wheels can be assumed to be similar within a set error margin, and thus the first and second distance should, when there is no pressure defect, correspond with respect to said set error margin.

Optionally in some examples, including in at least one preferred example, the first wheel and the second wheel share an axle of the vehicle.

A technical benefit may include improved tire pressure management, in particular relating to more accurately and efficiently detecting the tire pressure defect. This is since the loads applied to the wheels can be assumed to be similar within a set error margin when sharing the same axle, and thus the first and second distance should, when there is no pressure defect, correspond with respect to said set error margin.

Optionally in some examples, including in at least one preferred example, the processing circuitry is configured to: obtain second image data of the second tire, and to establish the second distance based on the second image data.

A technical benefit may include improved tire pressure management, in particular relating to more accurately and efficiently detecting the tire pressure defect. This is since the second distance can be automatically obtained by the second camera, thereby further automating the detection process and gathering accurate comparison data for detecting whether or not the first tire has a tire pressure defect.

Optionally in some examples, including in at least one preferred example, the processing circuitry is configured to: obtain vehicle information indicative of at least one of:
- load information of one or more axles of the vehicle, and
- one or more tire parameters of tires of the vehicle.

In some of these examples, the processing circuitry is configured to compare the first reference value with the second reference value by accounting for the vehicle information.

A technical benefit may include improved tire pressure management, in particular relating to more accurately and efficiently detecting the tire pressure defect. This is since when the load information and/or the one or more tire parameters are accounted for, the comparison between the first and second reference values can more accurately detect whether or not the first tire has a tire pressure defect. In particular, if there is differing load applied to different wheels and/or if respective tire parameters of the different wheels differ, the resulting first and second distances may differ even if their respective tires are pressurized the same. Hence, when such aspects can be accounted for, a more accurate detection can be made.

Optionally in some examples, including in at least one preferred example, the second wheel is a simulated wheel or a predefined model of the first wheel.

A technical benefit may include improved tire pressure management, in particular relating to more accurately and efficiently detecting the tire pressure defect. This is since the process can be fully automated as the second wheel can instead be simulated or be a predefined model which means that the first reference value can be immediately compared with a second reference value of the simulation or predefined model. Furthermore, this means that there is no need for an extra camera for this purpose.

Optionally in some examples, including in at least one preferred example, the processing circuitry is further configured to: in response to detecting that the first tire has a tire pressure defect, trigger an alert and/or an action preventing or hindering the vehicle from travelling.

A technical benefit may include improved tire pressure management. This is since it is supported that a warning may be issued and/or the vehicle may be prevented from travel using a tire with defect pressure, e.g., too high or too low pressure.

According to a second aspect of the disclosure, a vehicle comprising and/or being controlled by a computer system according to the first aspect is provided.

According to a third aspect of the disclosure, a computer-implemented method for detecting a tire pressure defect of a vehicle comprising a first wheel is provided. The first wheel comprises a first rim and a first tire.

The method comprises, by processing circuitry of a computer system, obtaining first image data indicative of the first wheel and a ground surface area in contact with the first tire.

The method further comprises, by the processing circuitry, based on the first image data, establishing a first reference value representing a first distance between the first rim and the ground surface area in contact with the first tire.

The method further comprises, by the processing circuitry, based on the established first reference value, detecting whether or not the first tire has a tire pressure defect.

Optionally in some examples, including in at least one preferred example, the first image data is obtained from a first camera directed towards a predetermined area. In these examples, the first wheel is arranged in the predetermined area.

Optionally in some examples, including in at least one preferred example, obtaining the first image data from the first camera comprises triggering the first camera to obtain the first image data in response to at least one of: detecting a presence of the vehicle and/or the first wheel in the predetermined area, and receiving a signal from the vehicle.

Optionally in some examples, including in at least one preferred example, the method further comprises by the processing circuitry, obtaining a second reference value indicative of a second distance representing any of: a distance across a predefined part of the first tire different from the first distance, or a distance across a predefined part of a second tire of a second wheel.

In these examples, the method may further comprise, by the processing circuitry, detecting whether or not the first tire has a tire pressure defect by comparing the first reference value with the second reference value, and wherein a tire pressure defect is detected when a difference of the comparison is above a threshold. The threshold may be predefined.

Optionally in some examples, including in at least one preferred example, obtaining the second reference value indicative of the second distance comprises: obtaining second image data of the second tire, and establishing the second distance based on the second image data.

Optionally in some examples, including in at least one preferred example, the method further comprises: by the processing circuitry, obtaining vehicle information indicative of at least one of: load information of one or more axles of the vehicle, and one or more tire parameters of tires of the vehicle. In these examples, detecting whether or not the first tire has a tire pressure defect comprises comparing the first reference value with the second reference value and accounting for the vehicle information.

The disclosed aspects, examples (including any preferred examples), and/or accompanying claims may be suitably combined with each other as would be apparent to anyone of ordinary skill in the art. Additional features and advantages are disclosed in the following description, claims, and drawings, and in part will be readily apparent therefrom to those skilled in the art or recognized by practicing the disclosure as described herein.

There are also disclosed herein computer systems, control units, code modules, computer-implemented methods, computer readable media, and computer program products associated with the above discussed technical benefits.

### BRIEF DESCRIPTION OF THE DRAWINGS

Examples are described in more detail below with reference to the appended drawings.
**FIG. 1** is an exemplary vehicle according to an example.
**FIG. 2** is a flow chart of an exemplary method according to an example.
**FIG. 3** illustrates an example scenario.
**FIG. 4** is another view of **FIG. 1****,** according to an example.
**FIG. 5** is a flow chart of an exemplary method according to an example.
**FIG. 6** is a schematic diagram of an exemplary computer system for implementing examples disclosed herein, according to an example.

### DETAILED DESCRIPTION

The detailed description set forth below provides information and examples of the disclosed technology with sufficient detail to enable those skilled in the art to practice the disclosure.

As identified when developing examples herein, prior to when a vehicle is to perform a mission and/or travel, in particular for autonomous vehicles, it may be efficient to inspect one or more of the vehicle's tires to see that they are well-pressurized and that there are no hazards present. This may be particularly important when the vehicle is autonomous as there may not be any user and/or vehicle occupant present to change a tire if needed during a mission. However, such inspections may be prone to error and/or time-consuming and may demand that an expert is available to perform such an inspection.

To alleviate or completely remove some of these issues, examples herein may instead allow for obtaining of image data of a tire, and detecting whether or not the tire has a tire pressure defect based on analyzing the image data and establishing a reference value of a distance between a rim and a ground surface according to the image data. The defect can then be detected with respect to the reference value, e.g., by checking if the reference value is above or below a threshold. While it may be possible to detect tire pressure defects such as flat tires with such an approach, examples herein further improve on accuracy and efficiency of such examples by comparing the reference value with other reference values indicative of other distances on the same tire or other tires which are relevant for comparison.

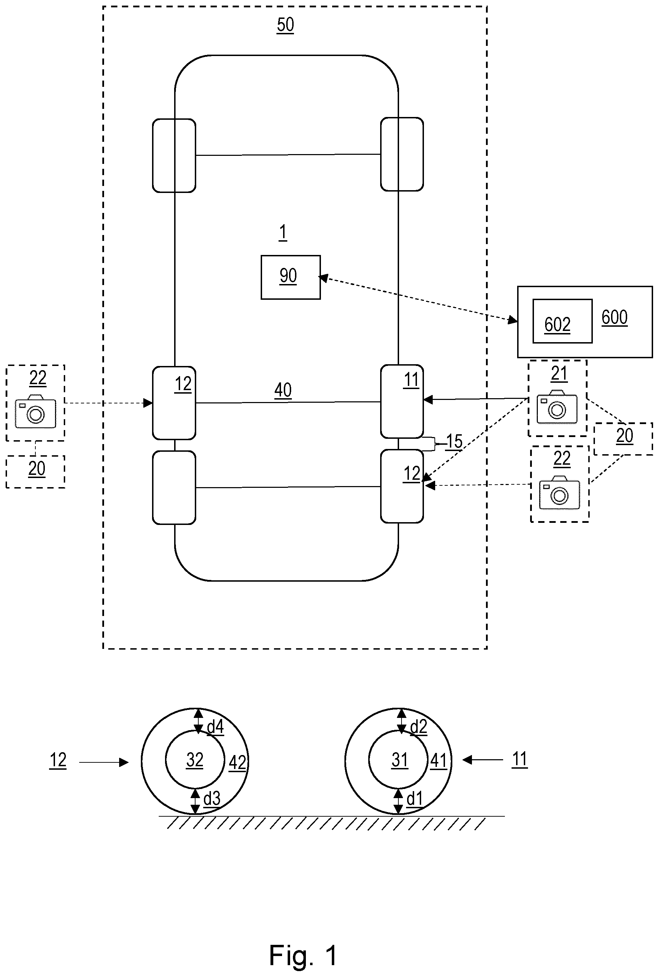

**FIG. 1** illustrates an example **vehicle 1.** The vehicle 1 may be any suitable vehicle, e.g., a truck, bus, car, heavy-duty vehicle, construction equipment, etc. The vehicle 1 may be a manually operated vehicle, remotely operated vehicle, or an autonomous vehicle. Autonomous as used herein may mean that the vehicle is at least partly operated without explicit input to an interface of the vehicle 1, e.g., wherein the vehicle 1 may automatically by itself control steering without steering input from a user, and/or wherein the vehicle 1 may automatically by itself control brakes or propulsion without any pedal or other acceleration or brake input from a user.

The vehicle 1 comprises a number of wheels such as a **first wheel 11.** The first wheel 11 comprises a **first tire 41** and a **first rim 31.**

Examples herein may relate to detecting a tire pressure defect of the first tire 41, e.g., when the first tire 41 is in a predetermined area 50. The predetermined area 50 may be an area associated with performing a pressure check prior to a mission of the vehicle 1. Examples herein may be initiated in response to the vehicle 1 entering the predetermined area 50 with the first tire 41. In particular, when the vehicle 1 is autonomous, the vehicle 1 may be configured to travel to the predetermined area 50 prior to performing a mission or task, e.g., to evaluate whether or not there is a tire pressure defect such as a flat tire associated with the first tire 41. While examples herein are focused on the first tire 41, the same examples as discussed herein may be performed for further tires such as every tire of the vehicle 1.

The vehicle 1 may comprise a number of axles such as an **axle 40.** The first wheel 11 may be coupled with the axle 40. The axle 40 may be a driven axle, although according to other examples the axle may be a non-driven axle. Similarly, the axle 40 may be a steered axle, although according to other examples the axle may be a non-steered axle.

Examples herein may relate to using a **first camera 21** to obtain first image data of the first tire 41. The first image data may be used as a basis to establish a first reference value representing a first **distance d1** between the first rim 31 and a ground surface area in contact with the first tire 41.

Examples herein may further relate to comparison of the first reference value with a second reference value indicative of a **second distance d2, d3, d4** representing any of:
- a distance d2 across a predefined part of the first tire 41 different from the first distance d1, or
- a distance d3, d4 across a predefined part of a second tire 42 of a **second wheel 12.**

The second wheel 12 may be a physical wheel of the vehicle 1, but it may also be that the second wheel 12 is a simulated wheel or a predefined model of the first wheel 11. This means that the second distance may be predefined or simulated based on the vehicle status, e.g., load and/or axle information of the vehicle 1. The second wheel 12 may comprise a **second rim 32** and a **second tire 42.**

In typical examples herein, the second distance may be the distance d3 which may be a distance between the second rim 32 and a ground surface area in contact with the second tire 42. In these examples, for highest accuracy, the second wheel 12 may share an axle and/or an axle group with the first wheel 11. In these examples, if there is a difference greater than a threshold between the first reference value and the second reference value, then there may be a tire pressure defect of the first tire 11. With regards to the use of the other distances to form the second reference value, it may be more difficult to accurately detect a potential defect due to normal tire behavior. In these situations, to improve accuracy, a vehicle status and/or characteristics may be needed, e.g., any one or more of: load information per axle or wheel, an axle configuration, vehicle type, etc.

In some examples, the second wheel 12 share an axle with the first wheel 11, i.e., the first wheel 11 and the second wheel 12 may be wheels of opposite ends of a shared axle such as the axle 40.

In some examples, the second wheel 12 may share an axle group with the first wheel 11 and/or may at least be arranged on a same side as the first wheel 11. In these examples, a **predefined distance 15** between the first wheel 11 and the second wheel 12 may need to be below a threshold for any tire distances of the respective wheels to be comparable without further information of the vehicle status, such as load information per axle or wheel.

In examples herein the second distance d2, d3, d4 may be obtained by the first camera 11 or a **second camera 22. As an alternative, in** some examples herein the second distance d2, d3, d4 may be obtained by the simulation or predefined model when applicable.

The first camera 21 and the second camera 22 may be part of a **camera arrangement 20** arranged for monitoring the predetermined area 50.

In examples herein, the first camera 21, and when applicable, the second camera 22, may be positioned in respective predefined positions and directed towards the predetermined area 50 such that image data of the first distance d1 and the second distance d2, d3, d4 can be obtained.

The examples herein may be performed by a **computer system 600** and/or a **processing circuitry 602** therein. The computer system 600 and/or the processing circuitry 602 therein may be able to control and/or communicate with any suitable entities of examples herein. In particular, the computer system 600 and/or the processing circuitry 602 therein may be able to obtain image data from any one or more of: the camera arrangement 20, the first camera 21, or the second camera 22.

In some examples, the computer system 600 and/or the processing circuitry 602 therein may be able to communicate with the vehicle 1, e.g., by use of a communications interface 90 of the vehicle 1.

In some examples, the computer system 600 and/or the processing circuitry 602 therein may be comprised in the vehicle 1, e.g., as part of an Electronic Control Unit (ECU) of the vehicle 1. In other examples, the computer system 600 and/or the processing circuitry 602 therein may be remote to the vehicle 1, e.g., as part of a server, cloud service, and/or the camera arrangement 20.

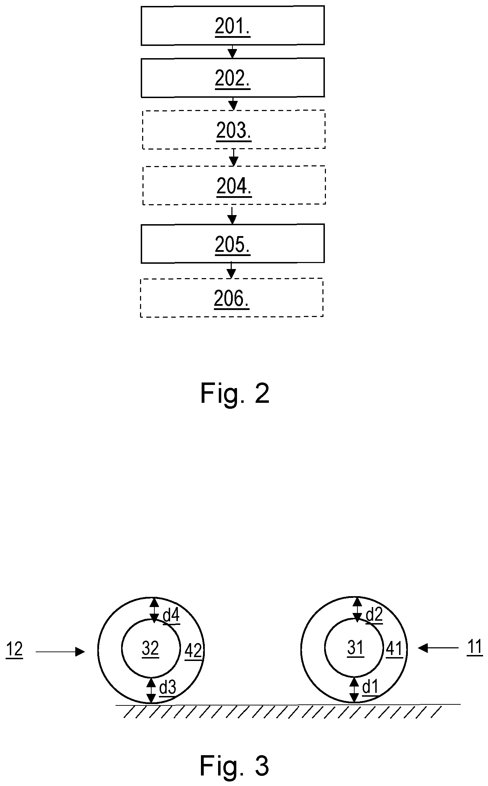

**FIG. 2** is a flow chart of an exemplary computer-implemented method for detecting a tire pressure defect of the vehicle 1. The vehicle 1 comprises the first wheel 11. The first wheel 11 comprises the first rim 31 and the first tire 41. The vehicle 1 may further comprise the second wheel 12, or the second wheel 12 is a simulated wheel or a predefined model of the first wheel 11. The method comprises the following actions which may be performed in any suitable order, and/or where applicable, in a concurrent manner. Dashed boxes in FIG. 2 may indicate optional actions. The method and actions may be performed by the computer system 600 and/or the processing circuitry 602 therein, in any suitable manner.

### Action 201

The method comprises obtaining first image data indicative of the first wheel 11 and a ground surface area in contact with the first tire 41. The first image data may be any suitable image data such as a photo or a video of the first tire 41, or any suitable data structure comprising information of an image of the first tire 41.

In some examples, the first image data is obtained from the first camera 21 directed towards the predetermined area 50. In examples herein the first wheel 11 may be arranged in the predetermined area 50.

The first distance d1 may be a distance along a virtual axle orthogonal - or essentially orthogonal such as orthogonal with an error margin - to the ground surface area. I.e., the first distance d1 may be measured vertically "straight up" from the ground surface area.

In some examples, obtaining the first image data from the first camera 21 may comprise triggering the first camera 21 to obtain the first image data in response to at least one of:
- detecting a presence of the vehicle 1 and/or the first wheel 11 in the predetermined area 50, e.g., by use of any sensor data and/or by detecting the vehicle 1 using the first camera 21 and
- receiving a signal from the vehicle 1, e.g., as transmitted to the computer system 600 using the communications interface 90.

### Action 202

The method comprises, based on the first image data, establishing a first reference value representing the first distance d1 between the first rim 31 and the ground surface area in contact with the first tire 41. The first distance may be the actual distance between the first rim 31 and the ground surface area in contact with the first tire 41, or a projected distance by the first image data, such as the distance as appearing on an image.

Establishing the first distance d1 based on the first image data may be performed by image analysis, machine learning, or by any other suitable means. The first reference value may be a value of the first distance d1.

### Action 203

In some examples, the method comprises obtaining a second reference value indicative of the second distance d2, d3, d4.

The second distance d2, d3, d4 may represent any suitable distance, e.g., comparable with the first distance d1.

The second distance d2, d3, d4 may represent the distance d2 across a predefined part of the first tire 41 different from the first distance d1. In particular, the distance d2 may be a distance between an upper-most part of the first wheel 11 and the first rim 31 of the first wheel 11. The first distance d1 and the distance d2 may combined form a diameter of the first wheel 11, or may at least be measurements along the same diameter of the first wheel 11.

The second distance d2, d3, d4 may represent the distance d3 or distance d4 across a predefined part of a second tire 42 of a second wheel 12.

The second distance d2, d3, d4 may be a distance along a virtual axle orthogonal - or essentially orthogonal such as orthogonal with an error margin - to the ground surface area. I.e., the second distance d2, d3, d4 may be measured vertically "straight up" from the ground surface area.

In some examples, obtaining the second reference value indicative of the second distance comprises obtaining second image data of the second tire 42, and establishing the second distance d2, d3, d4 based on the second image data. Establishing the second distance d2, d3, d4 based on the second image data may be performed by image analysis, machine learning, or by any other suitable means. In these examples, the method may comprise establishing the second reference value based on the second distance d2, d3, d4, e.g., the second reference value may be a value of the second distance d2, d3, d4.

In examples which may relate to a high accuracy, the second distance represents the distance d3 between the second rim 32 of the second wheel 12 and the ground surface area in contact with the second tire 42 of the second wheel 12.

The second image data may be a virtual image of a tire without a pressure defect e.g., when the second wheel 12 is simulated or is a predefined model of the first wheel 11, or the second image data may be an image representing a physical second wheel 42 of the vehicle 1.

In some examples, the second image data may be obtained via the first camera 11 or the second camera 12.

In some examples, the second reference value and/or the second distance is predefined.

### Action 204

In some examples, the method comprises obtaining vehicle information indicative of any suitable vehicle information which may need to be considered for detecting a tire pressure hazard by comparing the first and second reference values.

When the second reference value is established by a predefined distance or by the distance d3 between the second rim 32 of the second wheel 12 and the ground surface area in contact with a second tire 42 of the second wheel 12, e.g., as illustrated in FIG. 1, or by the distance d2 between an upper-most part of the first wheel 11 and the first rim 31 of the first wheel 11, e.g., as illustrated in FIG. 1, there may be no need to obtain the vehicle information as the accuracy should be sufficient. The vehicle information may however improve accuracy in these scenarios as well.

For some second distances such as distance d4 illustrated in FIG. 1, the variability or how different loads affect how much a tire is compressed may be too complex to assess from a single distance of an image, and hence, more information in terms of the vehicle information may be necessary to have sufficient accuracy.

For example, the vehicle information may be indicative of at least one of:
- vehicle characteristics, e.g., type of vehicle, mass or weight of vehicle, axle configuration, number of towed units, etc.
- load information of one or more axles of the vehicle 1, and
- one or more tire parameters of tires of the vehicle 1.

### Action 205

The method comprises, based on the established first reference value, detecting whether or not the first tire 41 has a tire pressure defect. The tire pressure defect may be a flat tire, low pressure, or a too high pressure, all of which may relate to hazards and/or inefficient operations of the vehicle 1.

If only considering the first reference value, detecting whether or not the first tire 41 has a tire pressure defect may comprise detecting that the first tire 41 has a tire pressure defect when the first reference value is outside a predefined interval. Alternatively, detecting whether or not the first tire 41 has a tire pressure defect may comprise detecting that the first tire 41 does not have a tire pressure defect if the first reference value is within a predefined interval.

In some examples, detecting whether or not the first tire 41 has a tire pressure defect comprises comparing the first reference value with the second reference value. A tire pressure defect is detected when a difference of the comparison is above a threshold. The threshold may for instance be set as deemed sufficient and/or relevant considering the application and/or situation at hand. The threshold may be predefined.

In some examples, detecting whether or not the first tire 41 has a tire pressure defect comprises comparing the first reference value with the second reference value and accounting for the vehicle information. For example, if it is indicated by the vehicle information that there is a higher load on the first tire 11 than on the second tire 12, then the first distance d1 and the second distance d2, d3, d4 may be different even under the same tire pressure. Such differences may be determined by a predefined tire model and accounted for.

In some examples, detecting whether or not the first tire 41 has a tire pressure defect comprises comparing the first reference value with the second reference value, and if such a comparison indicates a tire pressure defect of the first tire 11, e.g., when the difference is above a threshold, detecting whether or not the first tire 41 has a tire pressure defect may further comprise comparing the first reference value with a third reference value for confirming said detection of the tire pressure defect. If a resulting difference of the comparison is above a threshold, the tire pressure defect may be confirmed. The threshold may be predefined.

The third reference value may be established based on any of the distances d2, d3, d4 which is different from the second distance d2, d3, d4.

For example, the second reference value may be established based on the distance d2 across a predefined part of the first tire 41 different from the first distance d1, and the third reference value may be established based on the distance d3 across a predefined part of the second tire 42, or vice versa.

### Action 206

In some examples, the method may comprise, in response to detecting that the first tire 41 has a tire pressure defect, e.g., as in action 205, triggering an alert and/or an action preventing or hindering the vehicle 1 from travelling.

The alert may simply be a message or sound indicating that the first tire has a pressure defect.

The action preventing or hindering the vehicle 1 from travelling may comprise instructing the vehicle 1, e.g., which may be an autonomous vehicle, that it is not allowed to leave the predetermined area 50 and/or to perform a mission until a condition is met, e.g., until the first tire 11 has been replaced or re-pressurized.

**FIG. 3** illustrates an example scenario of the vehicle 1.

The first image data, e.g., as obtained in action 201, may be a photo from the first camera 11, and is indicative of the first distance d1. The first distance d1 serves as a basis for establishing the first reference value. The first reference value may be the first distance d1.

The second image data, e.g., as obtained in action 203, may be a photo from the second camera 12, or the same photo as for the first image data obtained from the first camera 11, and may be indicative of the second distance d2, d3, d4.

In particular, the second distance may be the distance d2 between an upper part of the first tire 41 to the first rim 31 or the distance d3 between the second rim 32 to the ground surface area in contact with the second tire 42. The second distance d2, d3, d4 serves as a basis for establishing the second reference value.

The first and/or second image data may be obtained when detecting that the vehicle 1 - or the first wheel 11 - is in the predetermined area 50.

Detecting whether or not the first tire 41 has a tire pressure defect may comprise detecting that the first and second reference values are different by more than a predefined threshold. This may mean that a distance from the first rim 31 to the ground surface in contact with the first tire 41 is much shorter, e.g., by a predefined threshold, than the distance between the first rim 31 to the upper part of the first tire 41, or that the distance from the first rim 31 to the ground surface in contact with the first tire 41 is much shorter, e.g., by a predefined threshold, than the distance between the second rim 32 to the ground surface in contact with the second tire 42. In these situations, a tire pressure defect may be detected, e.g., such that there is a likelihood of a low pressure in the first tire 41.

Such a detection may conclude the detection process or the detection may be verified or confirmed by a second comparison between the first reference value and a third reference value. Detecting whether or not the first tire 41 has a tire pressure defect may then comprise detecting that the first and third reference values are different by more than a predefined threshold.

The third reference value may be different from the second reference value and obtained using the first or second image data and may be established based on the distance d2 between an upper part of the first tire 41 to the first rim 31 or the distance d3 between the second rim 32 to the ground surface area in contact with the second tire 42.

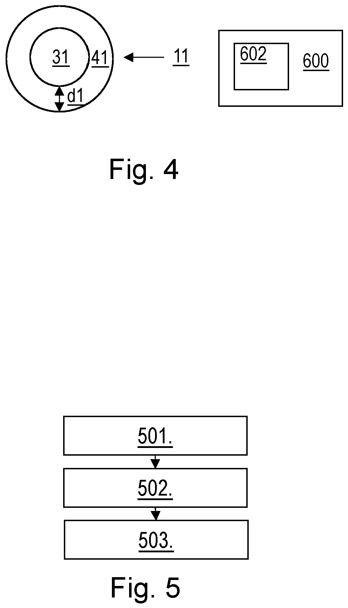

**FIG. 4** is another view of **FIG. 1****,** according to an example.

The computer system 600 comprising the processing circuitry 602 configured to detect a tire pressure defect of the vehicle 1 comprising the first wheel 11 is provided. The first wheel 11 comprises the first rim 31 and the first tire 41.

The processing circuitry 602 is configured to obtain first image data indicative of the first wheel 11 and a ground surface area in contact with the first tire 41.

The processing circuitry 602 is configured to, based on the first image data, establish a first reference value representing the first distance d1 between the first rim 31 and the ground surface area in contact with the first tire 41.

The processing circuitry 602 is configured to, based on the established first reference value, detect whether or not the first tire 41 has a tire pressure defect.

**FIG. 5** is a flow chart of an exemplary computer-implemented method for detecting a tire pressure defect of the vehicle 1 comprising the first wheel 11.

The first wheel 11 comprises the first rim 31 and the first tire 41.

The below method actions may be combined with any examples herein in any suitable manner.

### Action 501

The method comprises, by the processing circuitry 602 of the computer system 600, obtaining first image data indicative of the first wheel 11 and a ground surface area in contact with the first tire 41.

### Action 502

The method comprises, by the processing circuitry 602, based on the first image data, establishing a first reference value representing the first distance d1 between the first rim 31 and the ground surface area in contact with the first tire 41.

### Action 503

The method comprises, by the processing circuitry 602, based on the established first reference value, detecting whether or not the first tire 41 has a tire pressure defect.

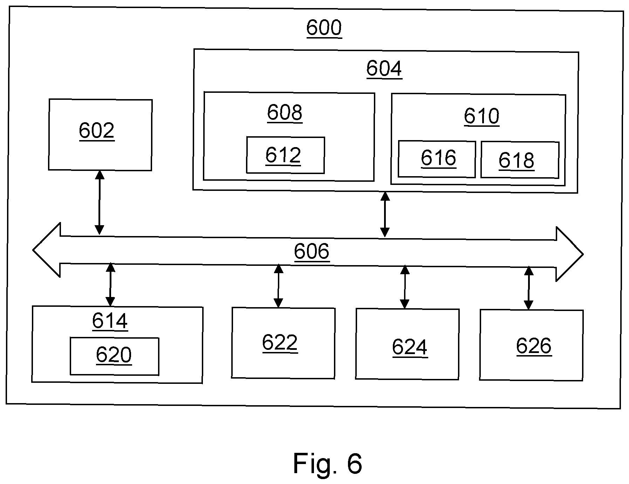

**FIG. 6** is a schematic diagram of a computer system **600** for implementing examples disclosed herein. The computer system **600** is adapted to execute instructions from a computer-readable medium to perform these and/or any of the functions or processing described herein. The computer system **600** may be connected (e.g., networked) to other machines in a LAN (Local Area Network), LIN (Local Interconnect Network), automotive network communication protocol (e.g., FlexRay), an intranet, an extranet, or the Internet. While only a single device is illustrated, the computer system **600** may include any collection of devices that individually or jointly execute a set (or multiple sets) of instructions to perform any one or more of the methodologies discussed herein. Accordingly, any reference in the disclosure and/or claims to a computer system, computing system, computer device, computing device, control system, control unit, electronic control unit (ECU), processor device, processing circuitry, etc., includes reference to one or more such devices to individually or jointly execute a set (or multiple sets) of instructions to perform any one or more of the methodologies discussed herein. For example, control system may include a single control unit or a plurality of control units connected or otherwise communicatively coupled to each other, such that any performed function may be distributed between the control units as desired. Further, such devices may communicate with each other or other devices by various system architectures, such as directly or via a Controller Area Network (CAN) bus, etc.

The computer system **600** may comprise at least one computing device or electronic device capable of including firmware, hardware, and/or executing software instructions to implement the functionality described herein. The computer system **600** may include processing circuitry **602** (e.g., processing circuitry including one or more processor devices or control units), a memory **604,** and a system bus **606.** The computer system **600** may include at least one computing device having the processing circuitry **602.** The system bus **606** provides an interface for system components including, but not limited to, the memory **604** and the processing circuitry **602.** The processing circuitry **602** may include any number of hardware components for conducting data or signal processing or for executing computer code stored in memory **604.** The processing circuitry **602** may, for example, include a general-purpose processor, an application specific processor, a Digital Signal Processor (DSP), an Application Specific Integrated Circuit (ASIC), a Field Programmable Gate Array (FPGA), a circuit containing processing components, a group of distributed processing components, a group of distributed computers configured for processing, or other programmable logic device, discrete gate or transistor logic, discrete hardware components, or any combination thereof designed to perform the functions described herein. The processing circuitry **602** may further include computer executable code that controls operation of the programmable device.

The system bus **606** may be any of several types of bus structures that may further interconnect to a memory bus (with or without a memory controller), a peripheral bus, and/or a local bus using any of a variety of bus architectures. The memory **604** may be one or more devices for storing data and/or computer code for completing or facilitating methods described herein. The memory **604** may include database components, object code components, script components, or other types of information structure for supporting the various activities herein. Any distributed or local memory device may be utilized with the systems and methods of this description. The memory **604** may be communicably connected to the processing circuitry **602** (e.g., via a circuit or any other wired, wireless, or network connection) and may include computer code for executing one or more processes described herein. The memory **604** may include non-volatile memory **608** (e.g., read-only memory (ROM), erasable programmable read-only memory (EPROM), electrically erasable programmable read-only memory (EEPROM), etc.), and volatile memory **610** (e.g., random-access memory (RAM)), or any other medium which can be used to carry or store desired program code in the form of machine-executable instructions or data structures and which can be accessed by a computer or other machine with processing circuitry **602.** A basic input/output system (BIOS) **612** may be stored in the non-volatile memory **608** and can include the basic routines that help to transfer information between elements within the computer system **600.**

The computer system **600** may further include or be coupled to a non-transitory computer-readable storage medium such as the storage device **614,** which may comprise, for example, an internal or external hard disk drive (HDD) (e.g., enhanced integrated drive electronics (EIDE) or serial advanced technology attachment (SATA)), HDD (e.g., EIDE or SATA) for storage, flash memory, or the like. The storage device **614** and other drives associated with computer-readable media and computer-usable media may provide non-volatile storage of data, data structures, computer-executable instructions, and the like.

Computer-code which is hard or soft coded may be provided in the form of one or more modules. The module(s) can be implemented as software and/or hard-coded in circuitry to implement the functionality described herein in whole or in part. The modules may be stored in the storage device **614** and/or in the volatile memory **610,** which may include an operating system **616** and/or one or more program modules **618.** All or a portion of the examples disclosed herein may be implemented as a computer program **620** stored on a transitory or non-transitory computer-usable or computer-readable storage medium (e.g., single medium or multiple media), such as the storage device **614,** which includes complex programming instructions (e.g., complex computer-readable program code) to cause the processing circuitry **602** to carry out actions described herein. Thus, the computer-readable program code of the computer program **620** can comprise software instructions for implementing the functionality of the examples described herein when executed by the processing circuitry **602.** In some examples, the storage device **614** may be a computer program product (e.g., readable storage medium) storing the computer program **620** thereon, where at least a portion of a computer program **620** may be loadable (e.g., into a processor) for implementing the functionality of the examples described herein when executed by the processing circuitry **602.** The processing circuitry **602** may serve as a controller or control system for the computer system **600** that is to implement the functionality described herein.

The computer system **600** may include an input device interface **622** configured to receive input and selections to be communicated to the computer system **600** when executing instructions, such as from a keyboard, mouse, touch-sensitive surface, etc. Such input devices may be connected to the processing circuitry **602** through the input device
interface **622** coupled to the system bus **606** but can be connected through other interfaces, such as a parallel port, an Institute of Electrical and Electronic Engineers (IEEE) 1394 serial port, a Universal Serial Bus (USB) port, an IR interface, and the like. The computer system **600** may include an output device interface **624** configured to forward output, such as to a display, a video display unit (e.g., a liquid crystal display (LCD) or a cathode ray tube (CRT)). The computer system **600** may include a communications interface **626** suitable for communicating with a network as appropriate or desired.

The operational actions described in any of the exemplary aspects herein are described to provide examples and discussion. The actions may be performed by hardware components, may be embodied in machine-executable instructions to cause a processor to perform the actions, or may be performed by a combination of hardware and software. Although a specific order of method actions may be shown or described, the order of the actions may differ. In addition, two or more actions may be performed concurrently or with partial concurrence.

Below follows a list of **Examples 1-20.** The below Examples 1-20 may be combined with any of the examples above, or with the subject matter of the attached claims in any suitable manner.
**Example 1.** A computer system 600 comprising processing circuitry 602 configured to detect a tire pressure defect of a vehicle 1 comprising a first wheel 11, the first wheel 11 comprising a first rim 31 and a first tire 41, wherein the processing circuitry 602 is further configured to:
   - obtain first image data indicative of the first wheel 11 and a ground surface area in contact with the first tire 41,
   - based on the first image data, establish a first reference value representing a first distance d1 between the first rim 31 and the ground surface area in contact with the first tire 41,
   - based on the established first reference value, detect whether or not the first tire 41 has a tire pressure defect.
**Example 2.** The computer system 600 of Example 1, wherein the processing circuitry 602 is further configured to obtain the first image data from a first camera 21 being directed towards a predetermined area 50, and wherein the first wheel 11 is at least partly arranged in the predetermined area 50.
**Example 3.** The computer system 600 of Example 2, wherein obtaining the first image data from the first camera 21 comprises triggering the first camera 21 to obtain the first image data in response to at least one of:
   - detecting a presence of the vehicle 1 and/or the first wheel 11 in the predetermined area 50, and
   - receiving a signal from the vehicle 1.
**Example 4.** The computer system 600 of any of the preceding Examples, wherein the processing circuitry 602 is further configured to:
   - obtain a second reference value indicative of a second distance d2, d3, d4 representing any of:
      - a distance d2 across a predefined part of the first tire 41 different from the first distance d1, or
      - a distance d3, d4 across a predefined part of a second tire 42 of a second wheel 12; and
   - detect whether or not the first tire 41 has a tire pressure defect by comparing the first reference value with the second reference value, and wherein a tire pressure defect is detected when a difference of the comparison is above a threshold, e.g., predefined threshold.
**Example 5.** The computer system 600 of Example 4, wherein the second distance represents a distance d3 between a second rim 32 of the second wheel 12 and a ground surface area in contact with a second tire 42 of the second wheel 12, and wherein the processing circuitry 602 is configured to establish the second reference value based on the second distance.
**Example 6.** The computer system 600 of Example 4 or 5, wherein the first wheel 11 and the second wheel 12 are arranged within a predefined distance 15 from each other and share the same axle group of the vehicle 1.
**Example 7.** The computer system 600 of any of Examples 4-6, wherein the first wheel 11 and the second wheel 12 share an axle 40 of the vehicle 1.
**Example 8.** The computer system 600 of any of Examples 4-7, wherein the processing circuitry 602 is configured to:
   - obtain second image data of the second tire 42, and to
   - establish the second distance based on the second image data.
**Example 9.** The computer system 600 of any of Examples 4-8, wherein the processing circuitry 602 is configured to:
   - obtain vehicle information indicative of at least one of:
      ∘ load information of one or more axles of the vehicle 1, and
      ∘ one or more tire parameters of tires of the vehicle 1; and to
   - compare the first reference value with the second reference value by accounting for the vehicle information.
**Example 10.** The computer system 600 of any of Examples 4-7, wherein the second wheel 12 is a simulated wheel or a predefined model of the first wheel 11.
**Example 11.** The computer system 600 of any of Examples 1-10, wherein the processing circuitry 602 is configured to:
   - in response to detecting that the first tire 41 has a tire pressure defect, trigger an alert and/or an action preventing or hindering the vehicle 1 from travelling.
**Example 12.** A vehicle 1 comprising and/or being controlled by a computer system 600 according to any of Examples 1-11.
**Example 13.** A computer-implemented method for detecting a tire pressure defect of a vehicle 1 comprising a first wheel 11, the first wheel 11 comprising a first rim 31 and a first tire 41, the method comprising:
   - by processing circuitry 602 of a computer system 600, obtaining 201, 501 first image data indicative of the first wheel 11 and a ground surface area in contact with the first tire 41,
   - by the processing circuitry 602, based on the first image data, establishing 202, 502 a first reference value representing a first distance d1 between the first rim 31 and the ground surface area in contact with the first tire 41,
   - by the processing circuitry 602, based on the established first reference value, detecting 205, 503 whether or not the first tire 41 has a tire pressure defect.
**Example 14.** The method of Example 13, wherein the first image data is obtained from a first camera 21 directed towards a predetermined area 50, and wherein the first wheel 11 is arranged in the predetermined area 50.
**Example 15.** The method of Example 14, wherein obtaining 201 the first image data from the first camera 21 comprises triggering the first camera 21 to obtain the first image data in response to at least one of:
   - detecting a presence of the vehicle 1 and/or the first wheel 11 in the predetermined area 50, and
   - receiving a signal from the vehicle 1.
**Example 16.** The method of any of Examples 13-15, further comprising:
   - by the processing circuitry 602, obtaining 203 a second reference value indicative of a second distance d2, d3, d4 representing any of:
      - a distance d2 across a predefined part of the first tire 41 different from the first distance d1, or
      - a distance d3, d4 across a predefined part of a second tire 42 of a second wheel 12; and
   - detecting 205 whether or not the first tire 41 has a tire pressure defect by comparing the first reference value with the second reference value, and wherein a tire pressure defect is detected when a difference of the comparison is above a threshold, e.g., predefined threshold.
**Example 17.** The method of Example 16, wherein obtaining 203 the second reference value indicative of the second distance comprises:
   - obtaining second image data of the second tire 42, and
   - establishing the second distance based on the second image data.
**Example 18.** The method of any of Examples 16-17, further comprising:
   - by the processing circuitry 602, obtaining 204 vehicle information indicative of at least one of:
      ∘ load information of one or more axles of the vehicle 1, and
      ∘ one or more tire parameters of tires of the vehicle 1; and
   - wherein detecting 205 whether or not the first tire 41 has a tire pressure defect comprises comparing the first reference value with the second reference value and accounting for the vehicle information.
**Example 19.** A computer program product comprising program code for performing, when executed by a processing circuitry 602, the method of any of Examples 13-18.
**Example 20.** A non-transitory computer-readable storage medium comprising instructions, which when executed by a processing circuitry 602, cause the processing circuitry to perform the method of any of Examples 13-18.

The terminology used herein is for the purpose of describing particular aspects only and is not intended to be limiting of the disclosure. As used herein, the singular forms "a," "an," and "the" are intended to include the plural forms as well, unless the context clearly indicates otherwise. As used herein, the term "and/or" includes any and all combinations of one or more of the associated listed items. It will be further understood that the terms "comprises," "comprising," "includes," and/or "including" when used herein specify the presence of stated features, integers, actions, steps, operations, elements, and/or components, but do not preclude the presence or addition of one or more other features, integers, actions, steps, operations, elements, components, and/or groups thereof.

It will be understood that, although the terms first, second, etc., may be used herein to describe various elements, these elements should not be limited by these terms. These terms are only used to distinguish one element from another. For example, a first element could be termed a second element, and, similarly, a second element could be termed a first element without departing from the scope of the present disclosure.

Relative terms such as "below" or "above" or "upper" or "lower" or "horizontal" or "vertical" may be used herein to describe a relationship of one element to another element as illustrated in the Figures. It will be understood that these terms and those discussed above are intended to encompass different orientations of the device in addition to the orientation depicted in the Figures. It will be understood that when an element is referred to as being "connected" or "coupled" to another element, it can be directly connected or coupled to the other element, or intervening elements may be present. In contrast, when an element is referred to as being "directly connected" or "directly coupled" to another element, there are no intervening elements present.

Unless otherwise defined, all terms (including technical and scientific terms) used herein have the same meaning as commonly understood by one of ordinary skill in the art to which this disclosure belongs. It will be further understood that terms used herein should be interpreted as having a meaning consistent with their meaning in the context of this specification and the relevant art and will not be interpreted in an idealized or overly formal sense unless expressly so defined herein.

It is to be understood that the present disclosure is not limited to the aspects described above and illustrated in the drawings; rather, the skilled person will recognize that many changes and modifications may be made within the scope of the present disclosure and appended claims. In the drawings and specification, there have been disclosed aspects for purposes of illustration only and not for purposes of limitation, the scope of the disclosure being set forth in the following claims.

## Claims

1. A computer system (600) comprising processing circuitry (602) configured to detect a tire pressure defect of a vehicle (1) comprising a first wheel (11), the first wheel (11) comprising a first rim (31) and a first tire (41), wherein the processing circuitry (602) is further configured to:
- obtain first image data indicative of the first wheel (11) and a ground surface area in contact with the first tire (41),
- based on the first image data, establish a first reference value representing a first distance (d1) between the first rim (31) and the ground surface area in contact with the first tire (41),
- based on the established first reference value, detecting whether or not the first tire (41) has a tire pressure defect.

2. The computer system (600) of claim 1, wherein the processing circuitry (602) is further configured to obtain the first image data from a first camera (21) being directed towards a predetermined area (50), and wherein the first wheel (11) is at least partly arranged in the predetermined area (50).

3. The computer system (600) of claim 2, wherein obtaining the first image data from the first camera (21) comprises triggering the first camera (21) to obtain the first image data in response to at least one of:
- detecting a presence of the vehicle (1) and/or the first wheel (11) in the predetermined area (50), and
- receiving a signal from the vehicle (1).

4. The computer system (600) of any of the preceding claims, wherein the processing circuitry (602) is further configured to:
- obtain a second reference value indicative of a second distance (d2, d3, d4) representing any of:
- a distance (d2) across a predefined part of the first tire (41) different from the first distance (d1), or
- a distance (d3, d4) across a predefined part of a second tire (42) of a second wheel (12); and
- detect whether or not the first tire (41) has a tire pressure defect by comparing the first reference value with the second reference value, and wherein a tire pressure defect is detected when a difference of the comparison is above a threshold.

5. The computer system (600) of claim 4, wherein the second distance represents a distance (d3) between a second rim (32) of the second wheel (12) and a ground surface area in contact with the second tire (42) of the second wheel (12), and wherein the processing circuitry (602) is configured to establish the second reference value based on the second distance.

6. The computer system (600) of claim 4 or 5, wherein at least one of:
- the first wheel (11) and the second wheel (12) are arranged within a predefined distance (15) from each other and share the same axle group of the vehicle (1), and
- the first wheel (11) and the second wheel (12) share an axle (40) of the vehicle (1).

7. The computer system (600) of any of claims 4-6, wherein the second wheel (12) is a simulated wheel or a predefined model of the first wheel (11), or wherein the processing circuitry (602) is configured to:
- obtain second image data of the second tire (42) of the second wheel (12), and to
- establish the second distance based on the second image data.

8. The computer system (600) of any of claims 4-7, wherein the processing circuitry (602) is configured to:
- obtain vehicle information indicative of at least one of:
∘ load information of one or more axles of the vehicle (1), and
∘ one or more tire parameters of tires of the vehicle (1); and to
- compare the first reference value with the second reference value by accounting for the vehicle information.

9. The computer system (600) of any of claims 1-8, wherein the processing circuitry (602) is configured to:
- in response to detecting that the first tire (41) has a tire pressure defect, trigger an alert and/or an action preventing or hindering the vehicle (1) from travelling.

10. A vehicle (1) comprising and/or being controlled by a computer system (600) according to any of claims 1-9.

11. A computer-implemented method for detecting a tire pressure defect of a vehicle (1) comprising a first wheel (11), the first wheel (11) comprising a first rim (31) and a first tire (41), the method comprising:
- by processing circuitry (602) of a computer system (600), obtaining (201, 501) first image data indicative of the first wheel (11) and a ground surface area in contact with the first tire (41),
- by the processing circuitry (602), based on the first image data, establishing (202, 502) a first reference value representing a first distance (d1) between the first rim (31) and the ground surface area in contact with the first tire (41),
- by the processing circuitry (602), based on the established first reference value, detecting (205, 503) whether or not the first tire (41) has a tire pressure defect.

12. The method of claim 11, wherein the first image data is obtained from a first camera (21) directed towards a predetermined area (50), and wherein the first wheel (11) is arranged in the predetermined area (50), and optionally, wherein obtaining (201) the first image data from the first camera (21) comprises triggering the first camera (21) to obtain the first image data in response to at least one of:
- detecting a presence of the vehicle (1) and/or the first wheel (11) in the predetermined area (50), and
- receiving a signal from the vehicle (1).

13. The method of any of claims 11-12, further comprising:
- by the processing circuitry (602), obtaining (204) vehicle information indicative of at least one of:
∘ load information of one or more axles of the vehicle (1), and
∘ one or more tire parameters of tires of the vehicle (1); and
- wherein detecting (205) whether or not the first tire (41) has a tire pressure defect comprises comparing the first reference value with the second reference value and accounting for the vehicle information.

14. A computer program product comprising program code for performing, when executed by a processing circuitry (602), the method of any of claims 11-13.

15. A non-transitory computer-readable storage medium comprising instructions, which when executed by a processing circuitry (602), cause the processing circuitry to perform the method of any of claims 11-13.
